# EUROPÄISCHE PATENTANMELDUNG

(11) **EP 3 769 597 A1**
(43) Veröffentlichungstag der Anmeldung: **27.01.2021**
(21) Anmeldenummer: 20000194.9
(22) Anmeldetag: 26.05.2020
(51) Int. Cl.: A01B 1/06, A01B 1/16

(54) **VON HAND FÜHRBARES GERÄT ZUR UNTERSTÜTZUNG DER GARTENARBEIT**

(30) Priorität: 24.07.2019 DE 202019003120 U; 30.10.2019 DE 202019004455 U; 20.01.2020 DE 202020000213 U
(71) Anmelder: Eberlein, Herbert, 89347 Bubesheim (DE)
(72) Erfinder: Eberlein, Herbert, 89347 Bubesheim (DE)

(57) **Zusammenfassung**

Die Erfindung betrifft ein von Hand führbares Gerät (1) zur Unterstützung der Gartenarbeit, mit einem elektrisch betriebenen Antriebsmechanismus, mit einem vom Antriebsmechanismus angetriebenen Wirkteil (8), das mit nach unten gerichteten, zum Eindringen in das Erdreich vorgesehenen Vorsprüngen (9, 9a, 9b) ausgestattet und vom Antriebsmechanismus in eine oszillierende Bewegung versetzbar ist und mit einer Abstützvorrichtung (6), die geeignet ist, sich beim Gebrauch des Geräts (1) am Boden abzustützen, wobei das Gerät (1) derart ausgebildet ist, dass es mit oder ohne einer Verlängerungseinrichtung (4) benutzbar ist.

Die Erfindung zeichnet sich dadurch aus, dass die oszillierende Bewegung des Wirkteils (8) quer zur Längsachse (13) des Geräts (1) erfolgt, dass das Wirkteil (8) mehr als drei Vorsprünge (9, 9a, 9b) aufweist und dass die Vorsprünge (9, 9a, 9b usw.) in Abständen so angeordnet sind, dass sich bei oszillierender Bewegung des Wirkteils (8) und bei gleichzeitigem Vorwärts- oder Rückwärtsbewegen des Geräts (1), die Wirkbereiche zumindest unmittelbar benachbarter Vorsprünge (z. B. 9, 9a oder 9a, 9c, oder 9b, 9d usw.) überschneiden.

Die Erfindung betrifft ferner ein von Hand führbares Gerät (1) zur Unterstützung der Gartenarbeit, bei dem die oszillierende Bewegung des Wirkteils (8) entlang der Längsachse (13) des Geräts (1) erfolgt.

## Beschreibung

Die Erfindung betrifft ein von Hand führbares Gerät zur Unterstützung der Gartenarbeit, mit einem elektrisch betriebenen Antriebsmechanismus, mit einem vom Antriebsmechanismus angetriebenen Wirkteil, das mit nach unten gerichteten, zum Eindringen in das Erdreich vorgesehenen Vorsprüngen ausgestattet und vom Antriebsmechanismus in eine oszillierende Bewegung versetzbar ist und mit einer Abstützvorrichtung, die geeignet ist, sich beim Gebrauch des Geräts am Boden abzustützen, wobei das Gerät derart ausgebildet ist, dass es mit oder ohne einer Verlängerungseinrichtung benutzbar ist.

Die Erfindung betrifft ferner ein von Hand führbares Gerät zur Unterstützung der Gartenarbeit, das wie eingangs beschrieben vorliegt, dessen Wirkteil jedoch in bekannter Weise längs der Längsachse des Geräts bewegbar ist.

Unkrautjäten im Garten ist zeitraubend. Insbesondere dann, wenn das Unkraut noch sehr klein ist und quasi mehr oder weniger mit den Fingerspitzen aus dem Erdreich herausgezupft werden muss. Eine gewisse Erleichterung verschafft eine Hacke oder ein unter dem Begriff "Sauzahn" bekanntes Gerät, mit dem man den zu jätenden Boden durchfurcht. Dennoch bleibt die Arbeit des mühsamen Aufsammelns des Unkrauts.

Das Dokument DE 20 2012 105 078 U1 beschreibt einen elektrischen Unkrautjäter, der wie eine Handbohrmaschine gestaltet ist, wobei anstelle eines Bohrers eine Anzahl stiftförmiger Wirkteile vorgesehen sind, die sich in Gebrauchslage des Unkrautjäters um eine vertikale Achse drehen lassen. Der Unkrautjäter ist zum Entfernen von in Rasenflächen befindlichem Unkraut vorgesehen und wird dabei so gehandhabt, dass die sich drehenden Wirkteile rund um die zu entfernende Unkrautpflanze in den Boden eingraben, so dass sich die Wurzeln der Unkrautpflanze um die Wirkteile schlingen und sich somit die Unkrautpflanze aus dem Boden herausheben lässt.

Im Dokument EP 1 127 481 A1 wird als Unkrautjäter eine Fingerhacke mit mechanischem Antrieb zur Unkrautbekämpfung vorgeschlagen, die mit Jätefingern ausgestattet ist, welche sich um eine gemeinsame Achse drehend in den Boden eingraben und das Unkraut auswerfen.

Es ist ein unter der Produktbezeichnung Stiga SGM 104 AE bekanntes, von Hand führbares Gerät zum Lockern von Gartenböden bekannt, das ein mit drei nach unten gerichteten Vorsprüngen ausgestattetes Wirkteil aufweist, das in eine in längs zur Längsachse des Geräts gerichtete oszillierende Bewegung versetzbar ist. Die Vorsprünge dringen etwa 10 Zentimeter weit in den Boden ein und bewirken durch die vibrierende Bewegung des Wirkteils eine Lockerung des Bodens.

Es ist Aufgabe der Erfindung, jeweils ein von Hand führbares Gerät der eingangs genannten Art so weiterzuentwickeln, dass bei deren Gebrauch das zuvor erwähnte mühsame Auszupfen oder Aufsammeln von relativ kleinem Unkraut nicht mehr erforderlich oder zumindest auf ein wesentlich geringes Maß reduzierbar ist.

Die Lösung der Aufgabe ist beim erstgenannten Gerät im kennzeichnenden Teil des Anspruchs 1 und beim zweiten Gerät im kennzeichnenden Teil des Anspruchs 9 beschrieben.

Die Vorteile der vorgeschlagenen Geräte zeigen sich besonders beim Einsatz in lockeren Böden, wie diese üblicherweise bei Gartenbeeten in Kleingärten zu finden sind. Setzt man das Gerät mit seiner Abstützvorrichtung am Boden auf, was sich für den Benutzer des Geräts als kräfteschonend erweist, dringen die am Wirkteil befindlichen Vorsprünge ein Stück weit in den Boden ein. Als Eindringtiefe kann man sich maximal 25mm vorstellen, um die Wurzeln benachbarter Nutzpflanzen nicht zu beschädigen. Versetzt man das Wirkteil in Bewegung, vollführen die in den oberen Bereich des Bodens ragenden Vorsprünge Hin- und Herbewegungen mit der Folge, dass das noch relativ kleine Unkraut entweder ausgerissen oder aus seiner ursprünglichen Lage entfernt wird und liegen bleibt. Sonneneinstrahlung lässt dann das liegengelassene Unkraut vertrocknen, ohne dass dieses mühsam aufgesammelt werden muss. Etwas hartnäckigeres Unkraut kann durch weitere oder etwas spätere Benutzung der vorgeschlagenen Geräte endgültig und zeitsparend entfernt werden.

Einen entscheidenden Vorteil der Neuerung erkennt man beim zuerst genannten Gerät dann, wenn man einen Vergleich zwischen der vorgeschlagenen Lösung und jenem eingangs genannten Gerät (Stiga) anstellt, das zum Lockern des Gartenbodens geeignet ist. Theoretisch könnte man dieses Bodenlockerungsgerät auch zum Entfernen von Unkraut verwenden, indem man dieses Gerät anhebt, was allerdings für einen Benutzer kräfteraubend ist, um dann die langen Vorsprünge nur ganz wenig in das Erdreich eintauchen zu lassen. Da jedoch die oszillierende Bewegung des Wirkteils, und damit der drei Vorsprünge, entlang oder parallel zur Mittelachse dieses Geräts erfolgt, erhielte man bei üblicher Geradeausbewegung dieses Geräts lediglich drei voneinander getrennt angeordnete, bearbeitete Streifen so dass zwischen diesen Streifen befindliches Unkraut stehen bliebe. Dieser nachteilige Effekt wird bei der vorgeschlagenen Lösung dadurch vermieden, dass die oszillierende Bewegung des Wirkteils quer zur Mittelachse und damit quer zur optimalen Geradeausbewegung erfolgt mit der Konsequenz, dass durch eine Vorwärts- oder Rückwärtsbewegung (Längenabschnitt) des neuen Geräts bei gleichzeitiger quer verlaufender oszillierender Bewegung des Wirkteils (Breitenabschnitt), also Länge mal Breite, pro Zeiteinheit, und ohne unbearbeitete Streifen zu hinterlassen, eine größere bearbeitete Fläche vorliegt, als dies bei dem eben angedachten Gerät (Stiga) der Fall wäre. Dieser Effekt wird insbesondere dann verstärkt, wenn die Vorsprünge, schräg gereiht, zur Längsachse des Geräts angeordnet sind, wie dies anhand der nachfolgenden Beschreibung verdeutlicht wird. Eine weitere vorteilhafte Optimierung entsteht dann, wenn sich die einzelnen Wirkbereiche der Vorsprünge, wie nachfolgend beschrieben, überschneiden. Der Einsatz dieses Geräts empfiehlt sich dann, wenn die Nutzpflanzen beliebig punktuell angepflanzt sind.

Sind die Nutzpflanzen hingegen eng in Längsreihen angepflanzt, was beispielsweise bei Möhren der Fall ist, besteht die Möglichkeit, unter Nutzung der nachfolgend beschriebenen erfinderischen Merkmale ein Gerät zu schaffen, bei dem das Wirkteil in bekannter Weise eine längs der Längsachse des Geräts erfolgende oszillierende Bewegung ausführt. Bei der Bekämpfung des Unkrauts ist bei beiden Geräten eine ziehende Bewegung des Geräts empfehlenswert.

Bei beiden Geräten erweist es sich ebenfalls als vorteilhaft, dass mehr als drei Vorsprünge vorgesehen sind, so dass auch größere Flächen Erdreich zeitsparend bearbeitet werden können.

Die Erfindung wird anhand von Ausführungsbeispielen näher erläutert. Dabei zeigt
- Fig. 1: ein Gerät zur Unterstützung der Gartenarbeit in Seitenansicht und in horizontaler Gebrauchslage;
- Fig. 2: das gleiche Gerät in Draufsicht;
- Fig. 3: eine vorteilhafte Ausführungsform eines Wirkteils sowie
- Fig. 4: eine Seitenansicht des in Fig. 3 beschriebenen Wirkteils.

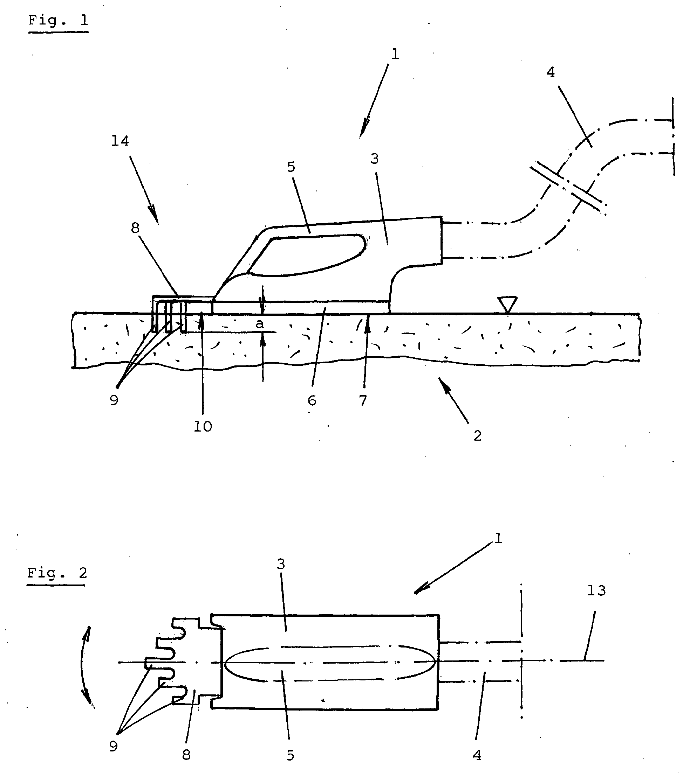

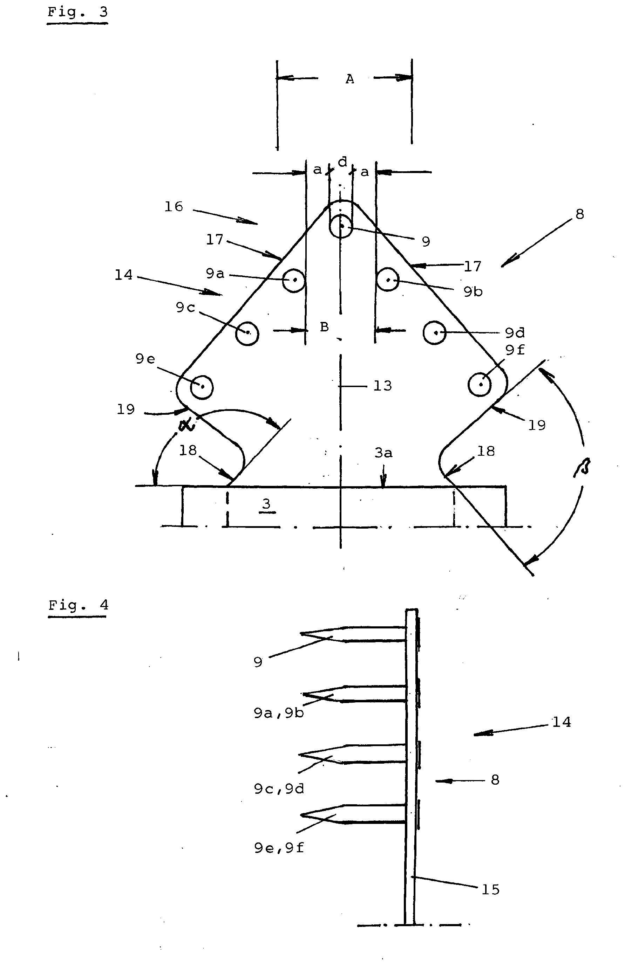

Fig. 1 zeigt in Seitenansicht ein von Hand führbares Gerät 1 zur Unterstützung der Gartenarbeit. Das Gerät 1 weist eine Gehäuseanordnung 3 auf, in der sich gewöhnlich ein elektrischer Energiespeicher, beispielsweise ein Akku, ein Elektromotor sowie ein mit dem Elektromotor gekoppelter Antriebsmechanismus befinden. Der Elektromotor, und damit das ganze Antriebssystem, ist ein- und ausschaltbar. Anstelle eines elektrischen Energiespeichers kann auch ein direkter Stromanschluss vorgesehen sein. Es ist hinten am Gerät 1 eine mit einer Schalteinrichtung ausgestattete Verlängerungseinrichtung 4 in Form einer bekannten Griffstange vorgesehen, so dass sich das Gerät 1 in aufrechter Körperlage benutzen lässt. Es ist ferner eine Griffeinrichtung 5 vorgesehen, mit deren Hilfe sich das Gerät 1, auch ohne Verlängerungseinrichtung 4, führen lässt. Im unteren Bereich 2 des Geräts 1 befindet sich eine etwa plattenförmige Abstützvorrichtung 6, die dazu dient, das Gerät 1 am Gartenboden kräfteschonend aufzusetzen und auf dem Gartenboden entlanggleiten zu lassen. Es ist ein mit mehr als drei nach unten gerichteten Vorsprüngen 9, 9a usw. ausgestattetes Wirkteils 8 vorgesehen, dessen unterste Begrenzung 10, in horizontaler Gebrauchslage des Geräts 1 betrachtet, tiefer angeordnet ist als der untere Bereich 7 der Abstützvorrichtung 6. Als unterer Bereich 7 der Abstützvorrichtung 6 kann dessen Boden verstanden werden. Das vorne am Gerät 1 vorgesehene Wirkteil 8 ist in bekannter Weise bewegbar mit dem Antriebsmechanismus so verbunden, dass dieses in der Lage ist, bei wirksamem Antriebsmechanismus eine oszillierende Bewegung quer zur Längsachse 13 des Geräts 1 auszuführen. Die Längsachse 13 ist identisch mit der optimalen und üblichen Bewegungsrichtung des Geräts 1, sowohl vorwärts als auch rückwärts. In Gebrauchslage des Geräts 1 erfolgt im Beispiel die oszillierende Bewegung in horizontaler Richtung, also innerhalb einer horizontalen Ebene und quer zur Längserstreckung des Geräts 1, also quer zur Längsachse 13. Die oszillierende Bewegung des Wirkteils 8 kann geradlinig oder bogenförmig verlaufen. Die Vorsprünge 9, 9a usw. können, als gesonderte Teile angefertigt, am Wirkteil 8 angeordnet sein. Die Vorsprünge 9, 9a, usw. können aber auch direkt am insbesondere aus gehärtetem Blech bestehenden Wirkteil 8 angeformt sein, so dass das Wirkteil 8 als Stanz- und Biegeteil einteilig vorliegt. Um die Vorsprünge 9, 9a usw., und damit das Wirkteil 8 besser reinigen zu können, sind die Vorsprünge 9, 9a usw., bevorzugt nach unten hin sich verjüngend, also spitziger werdend, gestaltet, siehe auch Fig. 4. Die Zeichnung zeigt das auf einem Erdreich aufgesetzte Gerät 1 in normaler Gebrauchslage. Die Oberseite des Erdreichs ist mit einem Dreiecksymbol gekennzeichnet. Man erkennt die in das Erdreich von oben nach unten eingedrungenen Vorsprünge 9, 9a usw. Das Maß a zeigt die Tiefe des Eindringens an. Die unterste Begrenzung 10 des Wirkteils 8, und damit die unterste Begrenzung der Vorsprünge 9, 9a usw., oder deren freie Enden, sind in horizontaler Gebrauchslage des Geräts 1 tiefer angeordnet als der untere Bereich 7 der Abstützvorrichtung 6. Die Vorsprünge 9, 9a usw. können so angeordnet sein, dass diese in Gebrauchslage des Geräts 1 entweder eine senkrechte oder eine schräg nach vorne oder schräg nach hinten oder schräg zur Seite abfallende Lage einnehmen.

Fig. 2 zeigt das in Fig. 1 beschriebene Gerät 1 in Draufsicht. Man erkennt die Gehäuseanordnung 3, einen Teil der Verlängerungseinrichtung 4 sowie die Griffeinrichtung 5. Gegenüber der Verlängerungseinrichtung 4 angeordnet ragt das Wirkteil 8 aus der Gehäuseanordnung 3 hervor. Es sind mehr als drei Vorsprünge 9, 9a, 9b usw. vorgesehen und versetzt angeordnet. Die Vorsprünge 9, 9a, usw. können von oben betrachtet V-förmig oder bogenförmig oder entsprechend einer anderen geometrisch gleichmäßigen Grundform folgend angeordnet sein. Der Doppelpfeil verweist auf die im Beispiel oszillierende Bewegbarkeit des Wirkteils 8. Es erschließt sich aus der Zeichnung, dass das Gerät 1 beim Gebrauch zwischen den Nutzpflanzen in beliebige Richtungen bewegt werden kann, ohne dass zum Beispiel die Vorsprünge 9, 9a usw. das Erdreich verlassen müssen.

Fig. 3 zeigt eine weitere Ausführungsform eines Wirkteils 8 in Draufsicht. Der vordere, also nach vorne ragende Bereich 14 des Wirkteils 8 ist pfeilförmig gestaltet und weist nach unten gerichtete Vorsprünge 9, 9a usw. mit bevorzugt zylindrischem Querschnitt auf. An der Pfeilspitze, also an der Spitze 16 des Wirkteils 8 befindet sich ein erster Vorsprung 9 an den sich beidseitig, also nahe der seitlichen Außenkanten 17 befindlich, in gleichen Abständen und unterschiedlichen Reihen eine Anzahl gleicher Vorsprünge, also ein zweiter Vorsprung 9a sowie ein dritter Vorsprung 9b usw. anschließen und die, bezogen auf die Mittelachse 13 des Wirkteils 8, spiegelbildlich und im Beispiel parallel zu den Außenkanten 17 verlaufend angeordnet sind. Die im vorderen Bereich 14 des Wirkteils 8 befindlichen seitlichen Außenkanten 17 des Wirkteils 8 laufen aufeinander zu, um eine Art Spitze 16 zu bilden. Die Außenkanten 17 können geradlinig oder durchaus auch bogenförmig, z. B. als ellipsenförmiger oder als kreisbogenförmiger Abschnitt gestaltet sein, die ebenfalls in Richtung Spitze 16 aufeinander zulaufen. Die dem Vorsprung 9 nachfolgenden Vorsprünge 9a, 9b usw. nähern sich der Gehäuseanordnung 3, befinden sich zu beiden Seiten der Längsachse 13 und sind ganz allgemein einer geometrisch regelmäßigen Grundform folgend, in Abständen zueinander angeordnet. Als geometrische Grundformen gelten zumindest solche Anordnungen der Vorsprünge 9, 9a, 9b usw., die beispielsweise kreisförmig, bogenförmig, kreisabschnittförmig, elliptisch, parabelförmig, rechteckig, quadratisch, V-förmig, X-förmig usw. vorliegen. Das Wirkteil 8 bewegt sich beim Gebrauch bogenförmig oder geradlinig quer zur Längsachse 13 des Geräts 1. Oberhalb der Spitze 16 ist in der Zeichnung ein Doppelpfeil dargestellt, der den Gesamtausschlag (Amplitude), in der Zeichnung also nach rechts und nach links, des sich oszillierend bewegenden Wirkteils 8 darstellt. Die Strecke des Gesamtausschlags ist vereinfacht mit dem Maß A gekennzeichnet. In der Zeichnung ist die Dicke d des ersten an der Pfeilspitze befindlichen Vorsprungs 9 eingezeichnet. Ausgehend vom ersten Vorsprung 9 sind die Abstände a zu den beiden nächstfolgenden Vorsprüngen 9a, 9b dargestellt. Das Maß A ist größer als die Summe der Teilstrecken a plus der Dicke d des an der Spitze 16 befindlichen ersten Vorsprungs 9, was bedeutet, dass die Strecke des Gesamtausschlags des Wirkteils 8 größer ist als der lichte Abstand B der beiden unmittelbar nachfolgenden zweiten und dritten Vorsprünge 9a und 9b. Gleichfalls sind die Vorsprünge 9, 9a, 9b usw. in Abständen so angeordnet, dass sich bei oszillierender Bewegung des Wirkteils 8 und bei gleichzeitiger Vorwärts- oder Rückwärtsbewegung des Geräts 1 auf dem Erdreich, zumindest die einzelnen unmittelbar benachbarten Wirkbereiche der Vorsprünge 9, 9a usw. überschneiden. So überschneidet beispielsweise der Wirkbereich des ersten Vorsprungs 9 die Wirkbereiche der unmittelbar nachfolgenden Vorsprünge 9a und 9b. Der Wirkbereich des zweiten Vorsprungs 9a wiederum überschneidet die Wirkbereiche der Vorsprünge 9 und 9c, während der dritte Vorsprung 9b die Wirkbereiche der Vorsprünge 9 und 9e überschneidet. Diese Betrachtungsweise kann je nach Anzahl von Vorsprüngen 9, 9a usw. beliebig fortgeführt werden. Aufgrund der im Beispiel umgekehrt V-förmigen Anordnung der Vorsprünge 9, 9a usw. in Verbindung mit dem Gesamtausschlag des Wirkteils 8 werden im praktischen Einsatz des Geräts 1, also bei dessen Bewegung in Pfeilrichtung oder auch rückwärts, alle auf einem Streckenabschnitt befindliche Pflanzen von wenigstens einem sich bewegenden Vorsprung 9, 9a, 9b usw. erfasst. Die beispielhaft gewählte Pfeilform des Wirkteils 8 erleichtert das Bewegen des Geräts 1 in Pfeilrichtung sowie das Bearbeiten des Bodens in unmittelbarer Nähe von Nutzpflanzen.
Um ein mögliches Verklemmen von kleinen im Erdreich befindlichen Steinen zu vermeiden ist es von Vorteil, ausgehend von den beiden Außenkanten 17, also den Umriss des Wirkeils 8 mitformend, je einen zur Längsachse 13 des Wirkteils 8 geneigt angeordneten Randabschnitt 19 vorzusehen, wobei jeder Randabschnitt 19 in jeweils eine zur Längsachse 13 schräg ansteigende Schulter 18 des Wirkteils 8 mündet. Der zu beiden Seiten sich ergebende Winkel Alpha zwischen der vorderen horizontalen Begrenzung 3a der Gehäuseanordnung 3 und der Schulter 18 ist in beiden Fällen größer 90°. Der wiederum zu beiden Seiten sich ergebende Winkel Beta zwischen der Schulter 18 und dem Randabschnitt 19 beträgt in beiden Fällen mindestens 90°. Bei quer zur Längsachse 13 oszillierender Bewegung des Wirkteils 8 werden kleine Steine, die an den schrägen Schultern 18 anliegen, von diesen zur Seite wegbefördert. Gleiches gilt für Erdreich, das sich beim Bearbeitungsvorgang nahe der Schultern 18 ansammeln kann.

In Seitenansicht betrachtet zeigt Fig. 4 den vorderen Bereich 14 des Wirkteils 8 mit den Vorsprüngen 9 bis 9f entsprechend Fig. 3. Das Wirkteil 8 weist einen aus stärkerem Blech gefertigten Grundkörper 15 auf, an dem sich die entweder senkrecht oder schräg nach unten gerichteten Vorsprünge 9 bis 9f beispielsweise in entsprechende, am Grundkörper 15 befindliche Durchbrüche eingesetzt, befinden und zum Beispiel mit dem Grundkörper 15 verschweißt oder vernietet sind. Der Grundkörper 15 trägt weitere Mittel, die mit dem Antriebsmechanismus zusammenwirken.

Die Neuerung lässt weitere Modifikationen zu.
So ist es möglich, den Grundkörper 15 des Wirkteils 8 zweigeteilt zu gestalten, wobei ein erster, die Vorsprünge 9 usw. tragender Abschnitt mit Hilfe einer bekannten, hier nicht näher dargestellten Verbindungseinrichtung auf einen mit dem Antriebsmechanismus verbunden zweiten Abschnitt lösbar aufsteckbar ist und auch von diesem wieder gelöst werden kann.
Es ist weiter möglich, das Wirkteil 8 im vorderen Bereich 14 breiter zu gestalten als die quer zur Längsachse 13 gemessene Breite der Gehäuseanordnung 3.
Möglich ist ferner, den Gesamtausschlag eines sich auf einer horizontalen Ebene sich bewegenden Wirkteils 8 so zu wählen, dass dieses nach rechts und nach links über die quer zur Längsachse 13 gemessene Breite der Gehäuseanordnung 3 hinausreicht.
Die Abstützvorrichtung 6 wiederum kann vertikalbeweglich an der Gehäuseanordnung 3 angeordnet sein. Geeignete, in sich greifende Führungen an der Abstützvorrichtung 6 und an der Gehäuseanordnung 3 machen dies möglich, wobei die Abstützvorrichtung 6 in wenigstens zwei unterschiedlichen Positionen festlegbar ist.
Auch kann die Abstützvorrichtung 6 durch zwei an den Seiten der Gehäuseanordnung 3 vorgesehene, auf einer quer zur Längsachse 13 gelegenen Achse drehbar gelagerte Laufräder gebildet sein.
Schließlich kann das Gerät 1 durch ein bekanntes Rasenschneidegerät gebildet sein, bei dem die quer zur Mittelachse 13 bewegbare Klinge und die ortsfeste Gegenklinge durch ein Wirkteil 8 ersetzt sind.

Schließlich wird ein Gerät 1 vorgeschlagen, bei dem das Wirkteil 8 eine längs der Längsachse 13 des Geräts 1 erfolgende oszillierende Bewegung ausführt, wobei das Wirkteil 8 ebenfalls mehr als drei Vorsprünge 9, 9a, 9b aufweist und zusammen mit den weiteren Vorsprüngen entweder einteilig vorliegt oder dass die Vorsprünge 9, 9a, 9b usw. als getrennte Teile gefertigt und mit dem Wirkteil 8 ortsfest verbunden sind. Da die oszillierende Bewegung des Wirkteils 8 längs der Längsachse 13 des Geräts 1 erfolgt, sind die Vorsprünge 9, 9a, 9b usw. in Abständen so angeordnet, dass sich bei der oszillierenden Bewegung des Wirkteils 8 und bei gleichzeitiger Bewegung des Geräts 1 in eine Richtung, die nicht der Richtung der Längsachse 13 entspricht, die Wirkbereiche zumindest unmittelbar benachbarter Vorsprünge 9, 9a, 9b usw. überschneiden, siehe vergleichend auch die Beschreibung zu Fig. 3. In der Gesamtbeschreibung finden sich technische Merkmale, die in den Ansprüchen 10 bis 15 aufgeführt sind. Diese technischen Merkmale lassen sich, ohne dass diese hier erneut beschrieben werden, auch auf das hier vorgeschlagene Gerät 1 übertragen.

## Patentansprüche

1. Von Hand führbares Gerät (1) zur Unterstützung der Gartenarbeit, mit einem elektrisch betriebenen Antriebsmechanismus, mit einem vom Antriebsmechanismus angetriebenen Wirkteil (8), das mit nach unten gerichteten, zum Eindringen in das Erdreich vorgesehenen Vorsprüngen (9, 9a, 9b) ausgestattet und vom Antriebsmechanismus in eine oszillierende Bewegung versetzbar ist und mit einer Abstützvorrichtung (6), die geeignet ist, sich beim Gebrauch des Geräts (1) am Boden abzustützen, wobei das Gerät (1) derart ausgebildet ist, dass es mit oder ohne einer Verlängerungseinrichtung (4) benutzbar ist, **dadurch gekennzeichnet, dass** die oszillierende Bewegung des Wirkteils (8) quer zur Längsachse (13) des Geräts (1) erfolgt, dass das Wirkteil (8) mehr als drei Vorsprünge (9, 9a, 9b) aufweist und dass die Vorsprünge (9, 9a, 9b usw.) in Abständen so angeordnet sind, dass sich bei oszillierender Bewegung des Wirkteils (8) und bei gleichzeitigem Vorwärts- oder Rückwärtsbewegen des Geräts (1), die Wirkbereiche zumindest unmittelbar benachbarter Vorsprünge (z. B. 9, 9a öder 9a,9c oder 9b, 9d usw.) überschneiden.

2. Gerät nach Anspruch 1, **dadurch gekennzeichnet, dass** die Abstützvorrichtung (6) durch zwei an den Seiten der Gehäuseanordnung (3) vorgesehene, auf einer quer zur Längsachse (13) gelegenen Achse drehbar gelagerte Laufräder gebildet ist..

3. Gerät nach Anspruch 1, **dadurch gekennzeichnet, dass** die Strecke des Gesamtausschlags des sich bewegenden Wirkteils (8) größer ist, als der lichte Abstand der unmittelbar dem ersten Vorsprung (9) folgenden zweiten und dritten Vorsprünge (9a, 9b).

4. Gerät nach Anspruch 1, **dadurch gekennzeichnet, dass** das Wirkteil (8) in seinem die Vorsprünge (9) tragenden Bereich breiter ist als die quer zur Längsachse (13) gemessene Breite der Gehäuseanordnung (3).

5. Gerät nach Anspruch 1, **dadurch gekennzeichnet, dass** der Gesamtausschlag des sich bewegenden Wirkteils (8) nach rechts und nach links über die quer zur Längsachse (13) gemessene Breite der Gehäuseanordnung (3) hinausreicht.

6. Gerät nach Anspruch 1, **dadurch gekennzeichnet, dass** sich an jede Außenkante (17) je ein zur Längsachse (13) geneigt angeordneter Randabschnitt (19) und an jeden Randabschnitt (19) wiederum jeweils eine schräg ansteigende Schulter (18) anschließt.

7. Gerät nach Anspruch 6, **dadurch gekennzeichnet, dass** der zu beiden Seiten zwischen der vorderen Gehäusebegrenzung (3a) der Gehäuseanordnung (3) und der Schulter (18) sich ergebende Winkel Alpha größer 90° ist.

8. Gerät nach Anspruch 7, **dadurch gekennzeichnet, dass** der zu beiden Seiten zwischen der Schulter (18) und dem Randabschnitt (19) sich ergebende Winkel Beta mindestens 90° beträgt

9. Von Hand führbares Gerät (1) zur Unterstützung der Gartenarbeit, mit einem elektrisch betriebenen Antriebsmechanismus, mit einem vom Antriebsmechanismus angetriebenen Wirkteil (8), das mit nach unten gerichteten, zum Eindringen in das Erdreich vorgesehenen Vorsprüngen (9, 9a, 9b) ausgestattet und vom Antriebsmechanismus in eine längs der Längsachse (13) des Geräts (1) erfolgende oszillierende Bewegung versetzbar ist und mit einer Abstützvorrichtung (6), die geeignet ist, sich beim Gebrauch des Geräts (1) am Boden abzustützen, wobei das Gerät (1) derart ausgebildet ist, dass es mit oder ohne einer Verlängerungseinrichtung (4) benutzbar ist, **dadurch gekennzeichnet, dass** das Wirkteil (8) mehr als drei Vorsprünge (9, 9a, 9b) aufweist und dass sich bei oszillierender Bewegung des Wirkteils (8) und bei gleichzeitiger Bewegung des Geräts in eine Richtung, die nicht der Richtung der Längsachse (13) entspricht, die Wirkbereiche zumindest unmittelbar benachbarter Vorsprünge (9, 9a, 9b, usw.) überschneiden.

10. Gerät nach Anspruch 1 oder 9, dass die Vorsprünge (9, 9a, 9b usw.), ausgehend von der Spitze des Wirkteils (8) und der Gehäuseanordnung (3) sich nähernd, einer geometrisch regelmäßigen Grundform folgend, in Abständen zueinander angeordnet sind.

11. Gerät nach Anspruch 1 oder 9, **dadurch gekennzeichnet, dass** das Wirkteil (8) zusammen mit seinen Vorsprüngen (9, 9a, 9b usw.) entweder einteilig vorliegt oder dass die Vorsprünge (9, 9a, 9b usw.), als getrennte Teile gefertigt, mit dem Wirkteil (8) ortsfest verbunden sind.

12. Gerät nach Anspruch 1 oder 9, **dadurch gekennzeichnet, dass** die Vorsprünge (9, 9a, 9b usw.) einen zylindrischen Querschnitt aufweisen und wahlweise nach unten spitziger werdend verjüngt sind.

13. Gerät nach Anspruch 1 oder 9, **dadurch gekennzeichnet, dass** die Abstützvorrichtung (6) vertikalbeweglich und in zwei unterschiedlichen Positionen festlegbar, an der Gehäuseanordnung (3) angeordnet ist.

14. Gerät nach Anspruch 1 oder 9, **dadurch gekennzeichnet, dass** das Wirkteil 8 zweigeteilt ist, wobei ein erster die Vorsprünge (9, 9a, 9b usw.) tragender Abschnitt mit Hilfe einer bekannten Verbindungseinrichtung auf einen mit dem Antriebsmechanismus verbundenen zweiten Abschnitt lösbar aufgesteckt ist.

15. Gerät nach Anspruch 1 oder 9, **dadurch gekennzeichnet, dass** dieses (1) durch ein bekanntes Rasenschneidegerät gebildet ist, bei dem die bewegbare Klinge und die ortsfeste Gegenklinge durch ein Wirkteil (8) ersetzt sind.
